# EUROPEAN PATENT SPECIFICATION

(11) **EP 3 369 681 B1**
(45) Date of publication and mention of the grant of the patent: **30.12.2020**
(21) Application number: 18159779.0
(22) Date of filing: 02.03.2018
(51) Int. Cl.: B65G 21/18, B65G 17/06

(54) **DIRECT EDGE DRIVE CONVEYOR BELT**
DIREKTRANDANTRIEBSFÖRDERBAND
COURROIE TRANSPORTEUSE À ENTRAÎNEMENT DE BORD DIRECT

(30) Priority: 03.03.2017 US 201762466640 P
(43) Date of publication of application: 05.09.2018
(73) Proprietor: Cambridge International, Inc., Cambridge, MD 21613 (US)
(72) Inventor: PERDUE, Thomas O., Salisbury, MD 21801 (US); MESSICK Jr, George H., Cambridge, MD 21613 (US); WILLEY, Crystal A., Vienna, MD 21869 (US); SALSONE, Frank, Glen Head, NY 11545 (US)
(74) Representative: Barnfather, Karl Jon

(56) References cited:
- EP-A1- 0 837 822
- US-A1- 2011 056 806
- US-B2- 9 061 829

## Description

### TECHNICAL FIELD

The present disclosure is directed to a conveyor belt and a conveyor belt system, and more particularly to a direct edge drive conveyor belt system for maintaining belt orientation and providing improved positive edge drive capability.

### BACKGROUND OF THE DISCLOSURE

Conveyor systems in which conveyor belts are driven in a helical path with the belt curving edgewise around a series of vertically spaced loops are commonly used to provide a great length of endless conveyor belt in a relatively small space. Such a spiral conveyor system is disclosed for example in U.S. Patent No. 3,348,659 In such a system, the belt is frictionally driven by driving elements which slidingly engage the radially inner edge of the belt in the helical loops. The driving elements move faster than the inner edge of the belt and continuously slide past the belt edge to achieve a frictional as opposed to a direct or positive drive. This prior system provides smooth dependable operation within its safe operating parameters, relative to speed, loading and belt width. When such parameters are exceeded, however, the belt is subjected to excessively high tension which can result in excessive wear and fatigue failure of the belt in addition to causing damage to the conveyor structure. Further, when the safe parameters are exceeded, surging of the belt can result which interferes with its smooth operation and causes disturbance of the products being conveyed.

Attempts have been made in certain prior art conveyor systems to employ a positive drive in which the radially inner edge of the belt is directly driven by the continued abutting engagement between the driving elements and the belt as opposed to a sliding frictional engagement. To obtain a positive drive, the driving elements must extend past the outer belt surface into the belt structure to engage interior drive surfaces of the belt. In a helical conveyor system, such engagement is difficult to initiate and maintain smoothly. Necessarily as the belt tangentially approaches and moves into its first helical loop, the pitch of the links along its radially inner edge changes as the curvature of the edge changes. Initial engagement of the drive elements with the driven surfaces along the belt edge while their pitch is changing results in rough belt operation and excessive wear of the affected components. Moreover, after the initial engagement, any significant variation in the pitch of the driven surfaces while traversing the helical loops is disadvantageous. Such pitch changes occur with any significant variation in the length of belt in the helical path. If there is an increase in pitch, driving contact can be lost. The belt can thus migrate backwardly along the loops and become slack in its approach to the first loop. If there is a decrease in the pitch, excessive belt tension results which causes various problems including surging, excessive wear, fatigue failure and other damage to the system. Still further, the invasion of the driving elements past the edge of the belt to contact the driven surfaces can result in damage if there is excessive penetration resulting in extraneous engagement with parts of the belt other than the intended driven surfaces.

With reference to FIG. 1, U.S. Patent No. 4,852,720, addresses the above concerns by providing a conveyor system comprising a conveyor belt 11 positively driven by drive cage 212 around a plurality of vertically spaced helical loops. A pair of supplemental positive drives 25 and 26, which are driven at the same speed and synchronized with the drive cage, engage the belt 11 near its entry into and exit from the helical portion of its endless path. Vertical driving bars 45 on the drive cage 21 positively engage the cross rod heads 14 of the belt 11 in its helical path. The driving surfaces of the bars 45 are relieved at 61 and 62 to prevent driving engagement with the rod heads 14 over an inlet section of the first loop and an exit section of the last loop. The driving bars 45 also engage the ends of the rod heads 14 to limit the penetration of the driving bars past the edge of the belt. The driving bars include means which may comprise gates 105 or ramps 121 to permit controlled intermittent slip-backs of the rod heads at predetermined intervals.

While successful, there still exists a need in the marketplace for a conveyor system for maintaining belt orientation, providing improved positive edge drive capability, and permitting smooth engagement of the driving bars with the belt edge as the belt enters the first loop at one end of the helical portion and smooth disengagement of the bars from the belt edge as the belt leaves the last loop at the opposite end of the helical portion.
Further background information can be found in EP0837822, which describes a conveyor belt adapted to be turned on a radius and discloses a conveyor belt according to the preamble of claims 1 and 2. Furthermore, background information can be found in US 9 061 829 which discloses a conveyor system according to the preamble of claim 10.

### SUMMARY

A conveyor belt according to a first aspect of the invention is defined by the appended claim 1, a further aspect is defined by the appended claim 2. A conveyor belt system according to the invention is defined by the appended claim 10. Further advantageous embodiments of the invention are defined by the dependent claims.

### BRIEF DESCRIPTION OF THE DRAWING FIGURES

These and other objects, features, and advantages of the invention will become more readily apparent to those skilled in the art upon reading the following detailed description, in conjunction with the appended drawings in which:

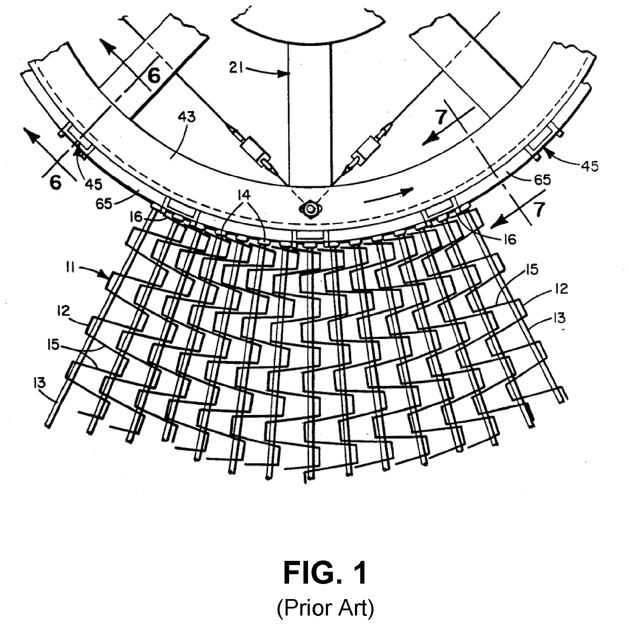

FIG. 1 is a fragmentary plan view of a portion of a known conveyor belt being driven in one of the helical loops by the driving cage.
FIG. 2 is a top elevational view of a portion of a conveyor belt according to a first exemplary embodiment of the disclosure in a curved path.
FIG. 3 is a left perspective view thereof.
FIG. 4 is a partial enlarged perspective view thereof (denoted by the circle outline) illustrating engagement of the conveyor belt with a spiral cage.
FIG. 5 is a further partial enlarged perspective view thereof (denoted by the circle outline) illustrating engagement of the conveyor belt with the spiral cage.
FIG. 6 is a partial top elevational view thereof (denoted by the circle outline) illustrating engagement of the conveyor belt with the spiral cage.
FIG. 7 is a partial enlarged view of FIG. 6 (denoted by the circle outline), illustrating engagement of the conveyor belt with the spiral cage.
FIG. 8 is a top elevational view of a conveyor belt according to a further exemplary embodiment of the disclosure in a straight path.
FIG. 9 is a left perspective view thereof.
FIG. 10 is a top elevational view thereof illustrating engagement of the conveyor belt with the spiral cage.
FIG. 11 in an enlarged view of Detail A shown in FIG. 10.
FIG. 12 is a top elevational view of a conveyor belt according to a further exemplary embodiment of the disclosure in a curved path.
FIG. 13 is a top elevational view of a conveyor belt according to a further exemplary embodiment of the disclosure in a curved path.
FIG. 14 is an enlarged view of Detail B shown in FIG. 13.
FIG. 15 is a partial bottom perspective view illustrating a hold-down clip engagement with a rail at either the approach portion or exit portion of the conveyor system.

### DETAILED DESCRIPTION

A direct edge drive conveyor belt will be described below by reference to the embodiments disclosed herein as examples and in accordance with the attached drawings. For purposes of illustration, the drawings include enlarged fragmentary portions of a conveyor belt as best shown within the annotated circle superimposed thereon in some of the figures. In the following descriptions of the various embodiments disclosed herein, it is understood that like reference numerals are used to describe the same elements throughout.

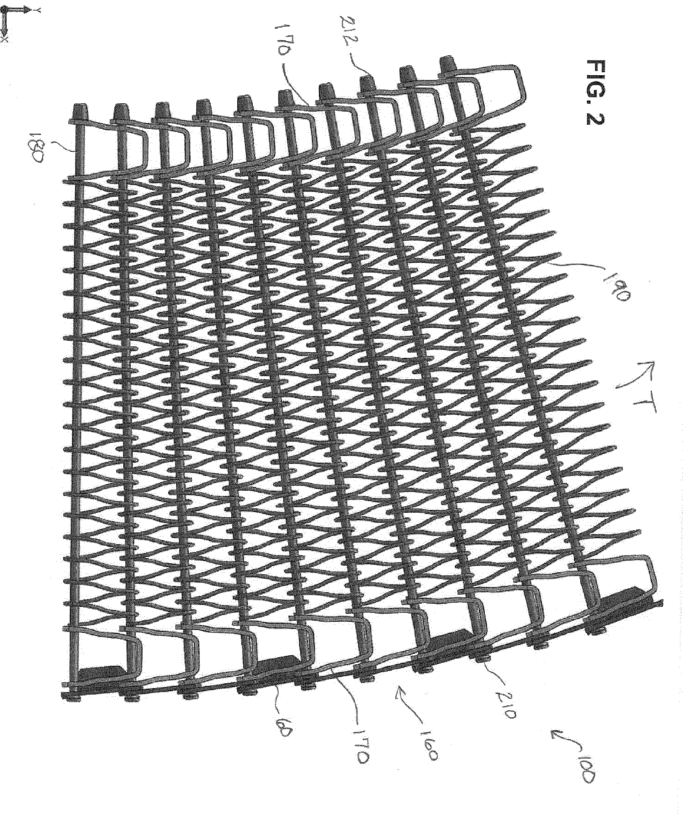

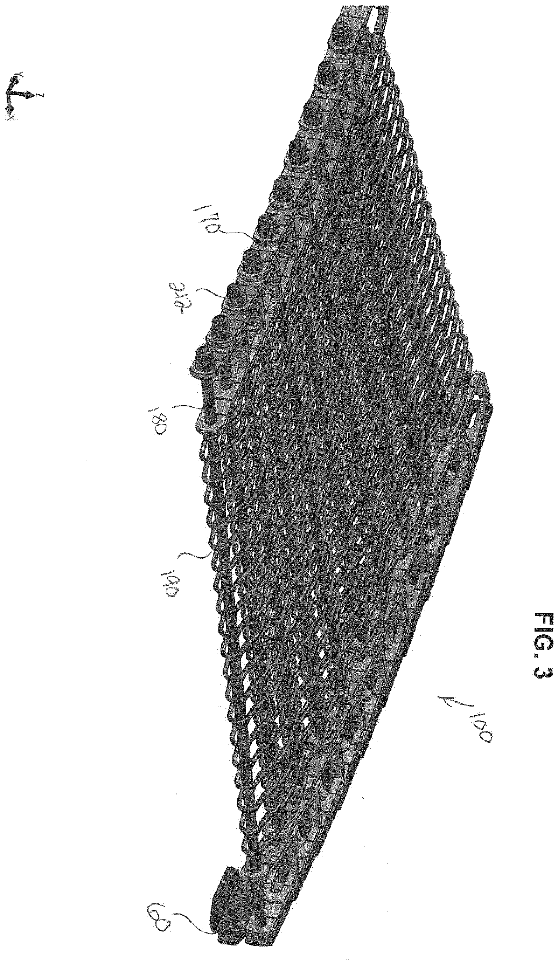

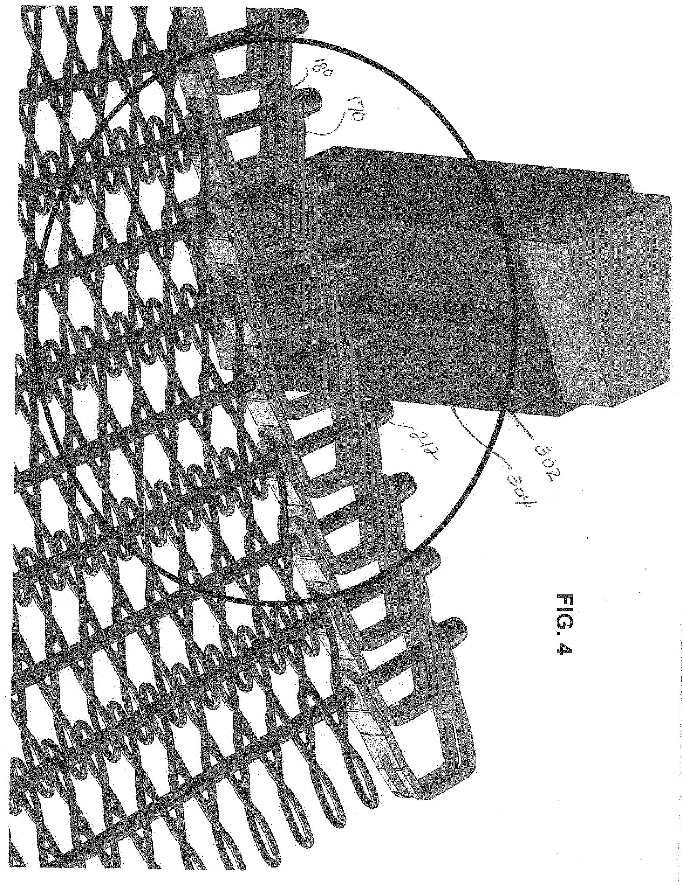

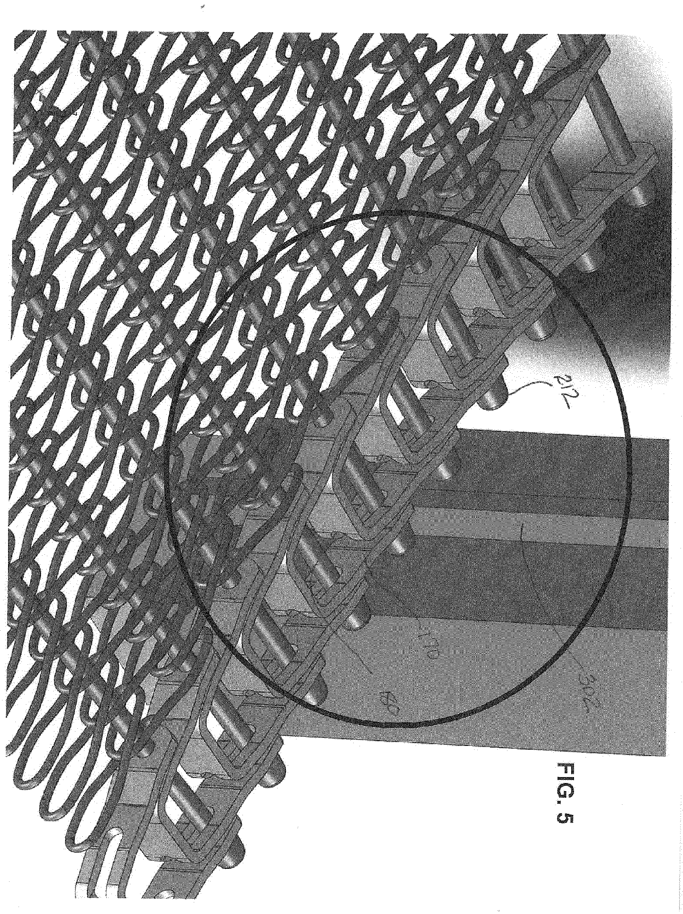

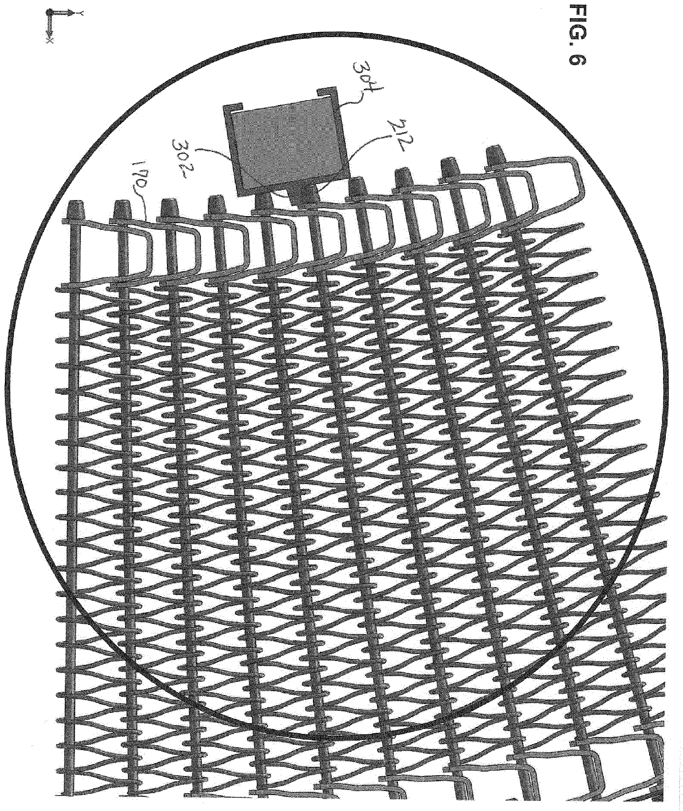

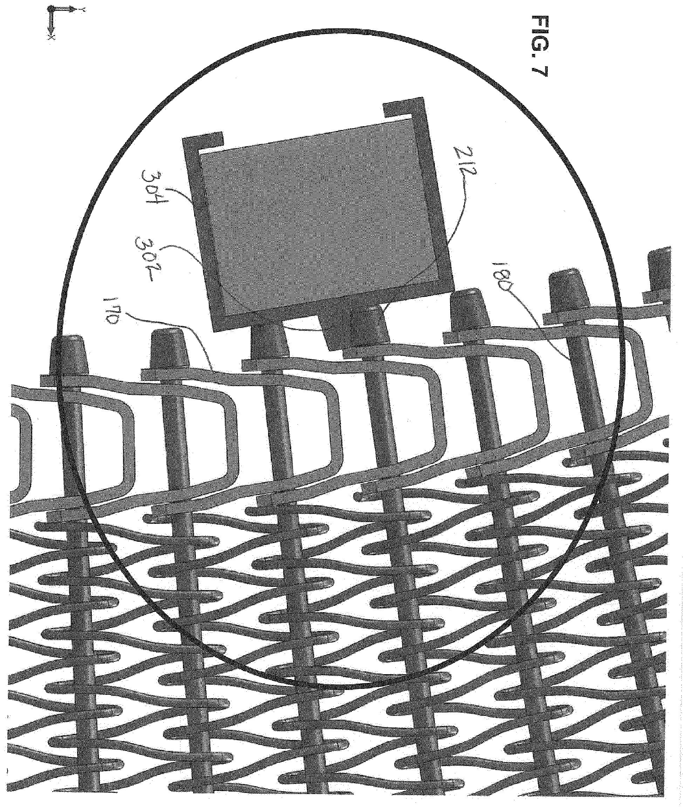

Referring to FIGS. 2-7, a conveyor belt in accordance with a first exemplary embodiment of the disclosure is shown generally by reference numeral 100. Conveyor belt 100 is preferably a mesh overlay conveyor belt, although other belt types and configurations could of course be used. Conveyor belt 100 includes a plurality of spaced tractive rods 180 disposed in succession and transversely with respect to a direction of travel of belt 100 as represented by arrow T.

Belt 100 includes a plurality of support rows 160 transversely disposed with respect to the direction of travel T, and interconnecting the succession of rods 180. Each row 160 is comprised of a plurality of U-shaped links 170, each link connecting a rod 180 with a following rod in the succession. More preferably, each row 160 includes at least one link 170 on each end and a mesh overlay 190 extending therebetween. In addition, belt 100 includes one or more rows including a hold-down clip 60 disposed along at least one edge of the conveyor belt which is intended to engage a rail on the conveyor. Hold-down clips 60 could also be positioned along both edges of the conveyor belt depending on the desired construction and function of the particular belt. Hold-down clips 60 are disclosed in U.S. Patent No. 9,061,829 to the present assignee. Still further, the conveyor belt 100 may also include belt drive clips (not shown) and reinforcing bars (not shown) or, alternatively, any combination of hold-down clips, belt drive clips and reinforcing bars. Thus, it should be apparent to one skilled in the art, that in accordance with the disclosure herein any combination of belt drive clips, hold-down clips and/or reinforcing bars may be used depending upon the particular application for which the conveyor belt is intended.

The combination of hold-down clips 60 on the outer edge of the conveyor belt with a welded U-shaped link 170 and rod 180 assembly provides support for the position of the metal mesh overlay 190. The rows of hold-down clips 60 along the outer, tension-bearing belt edge provide superior strength to offset the belt tension that results during system operation. The hold-down clips 60 are also used to position the belt properly for engagement with the spiral drum, as discussed further below.

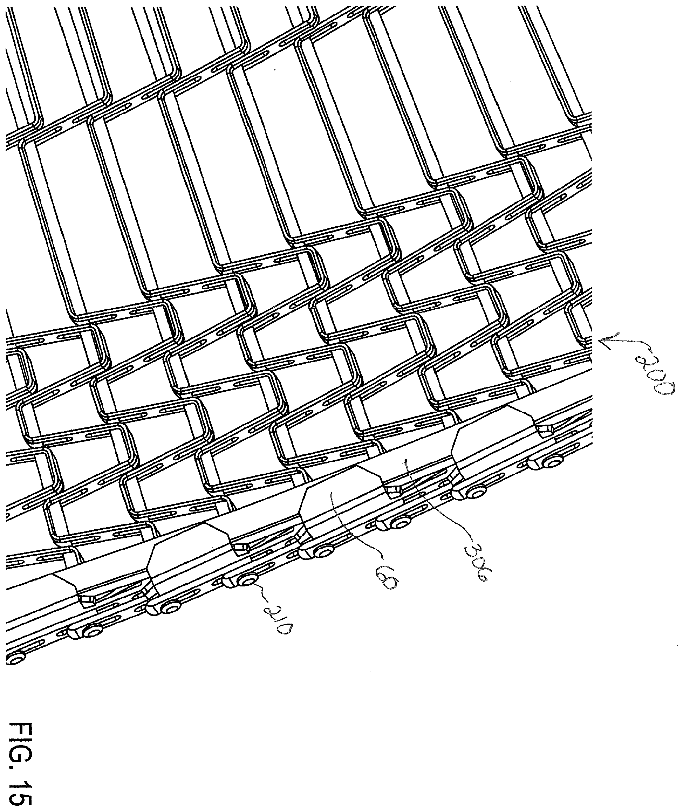

Each connecting rod 180 has two ends, one end preferably terminating in a conventional button head 210 and the other end terminating in a truncated cone 212. The cone end 212 is a modification of the conventional welded button head that creates an extension on the inside edge of the belt 100 so that it can positively engage the vertical drive lugs 302 on a rotating spiral cage 304. The truncated conical shape on the rod end 212 allows for smoother engagement and disengagement with spiral drive means, such as the vertical drive lugs 302 on the rotating spiral cage 304, without the concern for orientation and the cone ends 212 provide a smooth face for contact with the drive lugs 302 at any point of travel along the belt when in contact with the vertical drive lugs 302. Referring also to FIG. 15, the rail 306 of the conveyor system should be constructed with a gradually decreasing radius of curvature such that, when used with the hold-down links 60 on the outer edge of the belt 100, it prevents the inside edge of the belt 100 from contacting the drive lugs 302 on the rotating spiral cage 304 until the proper position of the belt has been reached and engagement can occur. That is, the rail 306 includes an approach portion leading into a first loop at one end of the helical portion of the conveyor system and an exit portion leading away from a last loop at the other end of the helical portion of the conveyor system. The radius of the rail 306 at the approach portion is configured such that the hold-down clips 60 hold the conveyor belt 100 away from the rotating spiral drive means and then gradually bring the belt 100 closer and into contact with the first drive lug 302 so that the cone shaped end 212 can smoothly engage the drive lug 302. Similarly, upon exiting the helical portion of the conveyor system, the radius of the rail 306 is configured to allow for smooth disengagement between the drive lugs 302 and the cone shaped ends 212.

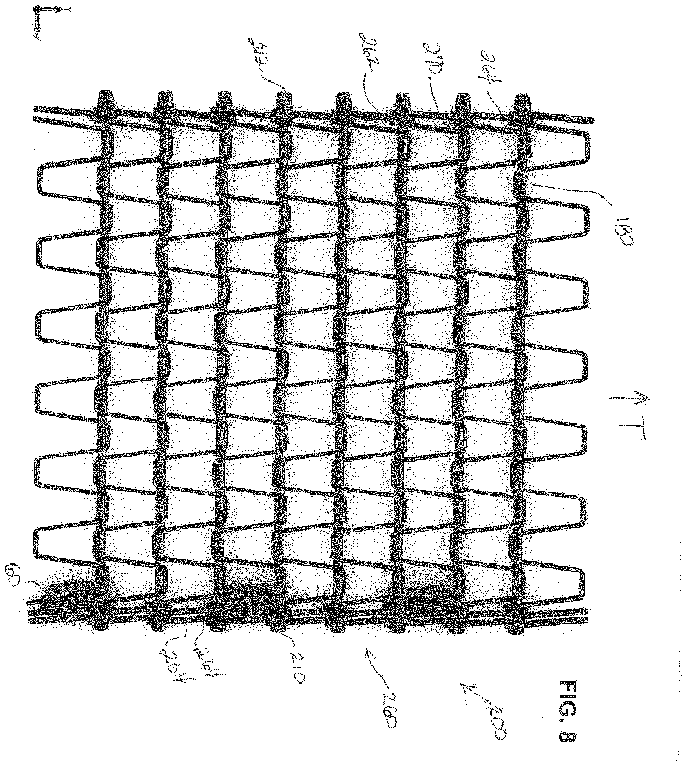

Referring to FIGS. 8-11, a conveyor belt in accordance with the first aspect of the disclosure is shown generally by reference numeral 200. Conveyor belt 200 is preferably a flat wire conveyor belt, although other belt types and configurations could of course be used. Conveyor belt 200 includes a plurality of spaced tractive rods 180 disposed in succession and transversely with respect to a direction of travel of belt 200 as represented by arrow T.

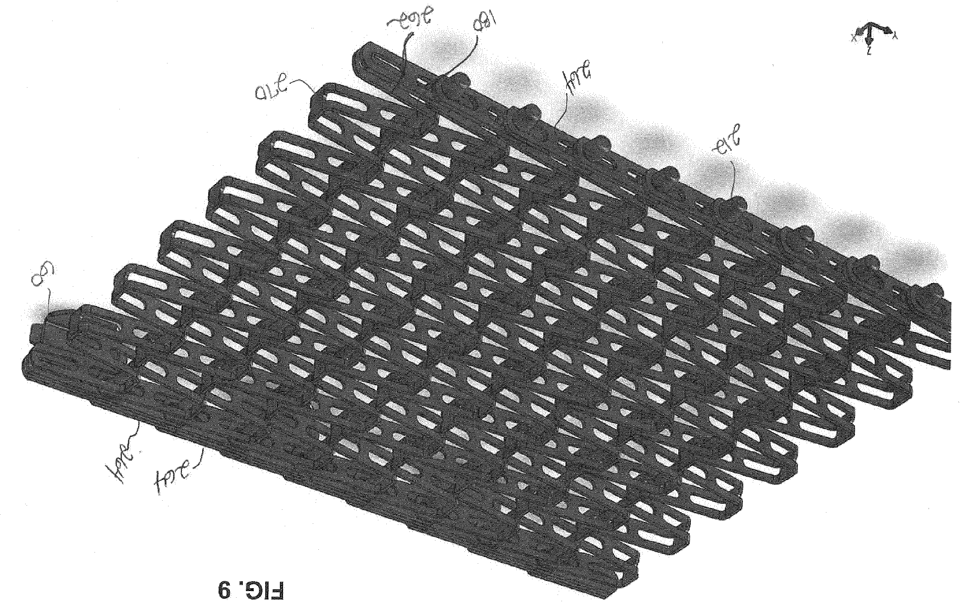

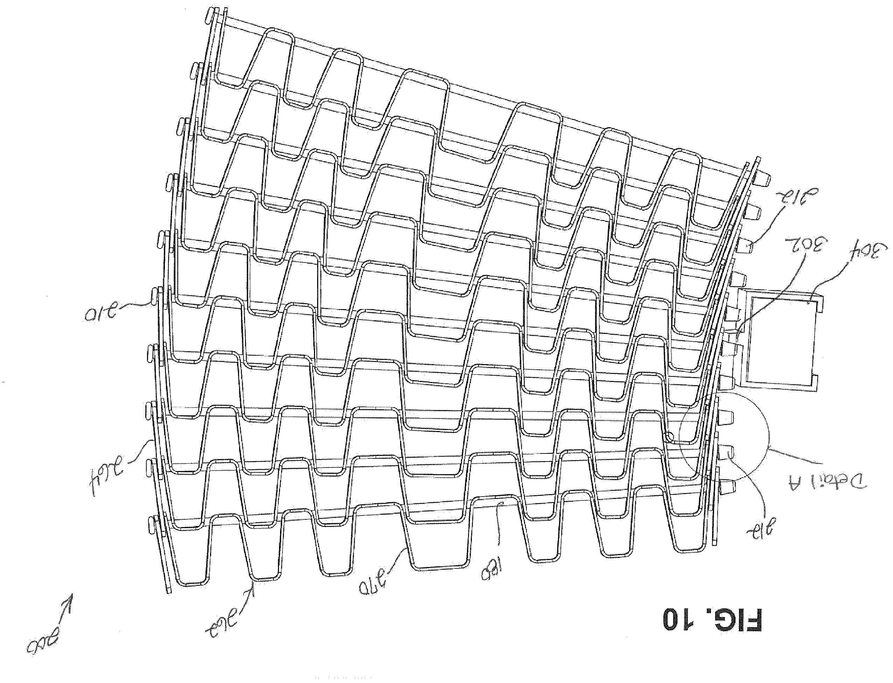

Belt 200 includes a plurality of support rows 260 transversely disposed with respect to the direction of travel T, and interconnecting the succession of rods 180. Each row 260 is comprised of a wicket 262 comprising a plurality of U-shaped links 270 connecting a rod 180 with a following rod in the succession. Conveyor belt 200 also may include one or more rows of reinforcing bars 264 along one or both edges. In the illustrated embodiment of FIGS. 8 and 9, conveyor belt 200 includes one row of reinforcing bars 264 on the inner edge and two rows of reinforcing bars 264 on the outer edge, whereas in FIG. 10 there are two rows of reinforcing bars 264 on the inner edge and single row of bars 264 on the outer edge. In addition, belt 200 preferably includes one or more rows including a hold-down clip 60 disposed along at least one edge of the conveyor belt which is intended to engage a rail on the conveyor. Hold-down clips 60 could also be positioned along both edges of the conveyor belt depending on the desired construction and function of the particular belt. Hold-down clips 60 are disclosed in U.S. Patent No. 9,061,829 to the present assignee. Still further, conveyor belt 200 may also include belt drive clips (not shown) and reinforcing bars (not shown) or, alternatively, any combination of hold-down clips, belt drive clips and reinforcing bars. Thus, it should be apparent to one skilled in the art, that any combination of belt drive clips, hold-down clips and/or reinforcing bars may be used depending upon the particular application for which the conveyor belt is intended.

Each connecting rod 180 has two ends, one end preferably terminating in a conventional button head 210 and the other end terminating in a truncated cone 212. The cone end 212 is a modification of the conventional welded button head that creates an extension on the inside edge of the belt 200 so that it can positively engage the vertical drive lugs 302 on a rotating spiral cage 304. The truncated conical shape on the rod end 212 allows for smoother engagement and disengagement with the vertical drive lugs 302 on the rotating spiral cage 304 without the concern for orientation. The cone ends 212 also provide a smooth face for contact with the drive lugs 302 at any point of travel along the belt when in contact with the vertical drive lugs 302. The rail of the conveyor (not shown) should preferably be constructed with a gradually decreasing radius of curvature such that when used with the hold-down links 60 on the belt 200 it prevents the inside edge of the belt 200 from contacting the drive lugs on the rotating spiral cage until the proper position of the belt has been reached and engagement can occur.

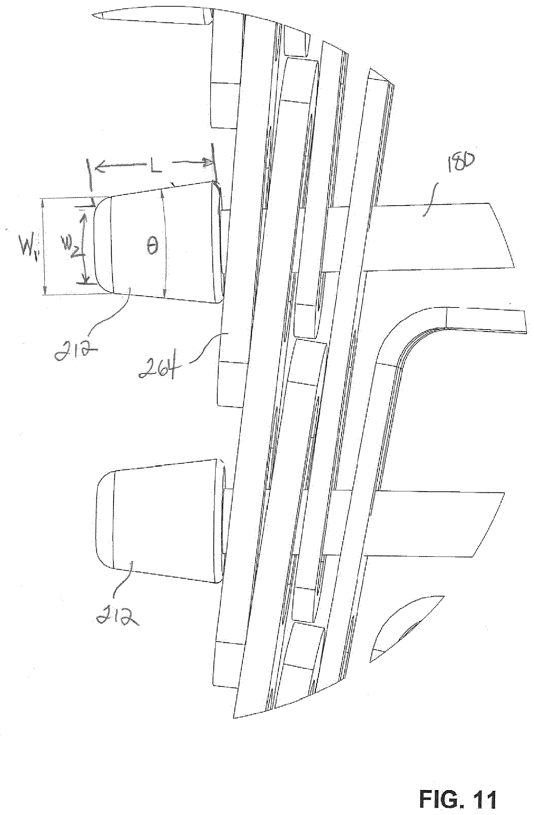

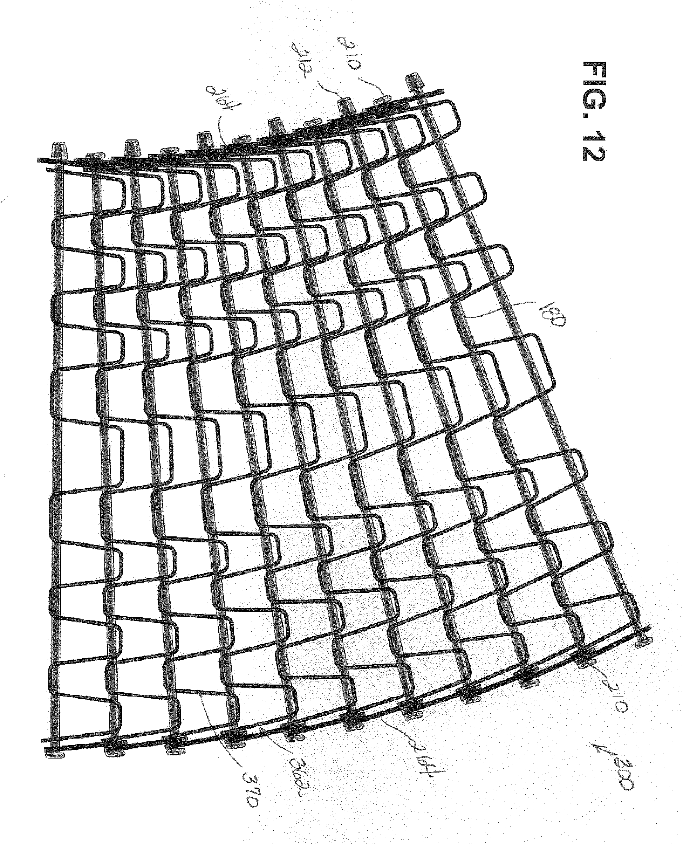

FIG. 11 illustrates an enlarged view of an exemplary embodiment of the cone end 212 of the connecting rod 180. Preferably, the truncated conical ends 212 have an overall length L (in the axial direction of the connecting rod 180) of approximately . 6.35 mm to 12.7 mm (0.25 inch to 0.5 inch), preferably. 9.52 mm (0.375 inch). The ends 212 have tapered side surfaces defining an angle θ from the horizontal of approximately 15 degrees. At the base of the cone end 212 adjacent the reinforcing bar 264, the diameter of the cone end 212 is approximately 9.14 mm (0.36 inch). At the distal end of the frustoconical body portion, the cone end 212 has a width W1 (diameter) of approximately 7.62 mm (0.3 inch). The cone end 212 has rounded distal edges and, at the terminal end of the cone 212, a substantially planar end surface defining a width W2 (diameter) of approximately 4.32 mm (0.17 inch) is defined. Although FIG. 11 is shown as an enlarged detail of conveyor belt 200 shown in FIGS. 8-10, one skilled in the art will understand that the cone end 212 shown in FIG. 11 also corresponds to the cone end 212 illustrated in FIGS. 2-7, and the cone end 212 of the further embodiment shown in FIG. 12 and discussed below.

A conveyor belt in accordance with a further exemplary embodiment is shown generally in FIG. 12 by reference numeral 300. Conveyor belt 300 preferably comprises a flat wire conveyor belt as described above relative to conveyor belt 200, although other belt types and configurations could of course be used. Conveyor belt 300 differs from the previously described conveyor belt 200 primarily in that the cone ends 212 are only provided on the inner edge of every other connecting rod 180 rather than each connecting rod 180. More particularly, a first connecting rod 180 will have a button head end 210 on both the inner and outer edges and an adjacent connecting rod 180 will have a button head end 210 on the outer edge and a cone end 212 on the inner edge. Although not pertinent to the disclosure herein, conveyor belt 300 also differs from the previously described flat wire belt 200 in that wicket 362 includes a plurality of variably spaced U-shaped links 370 and only a single reinforcing bar 264 is shown on the inner and outer edges.

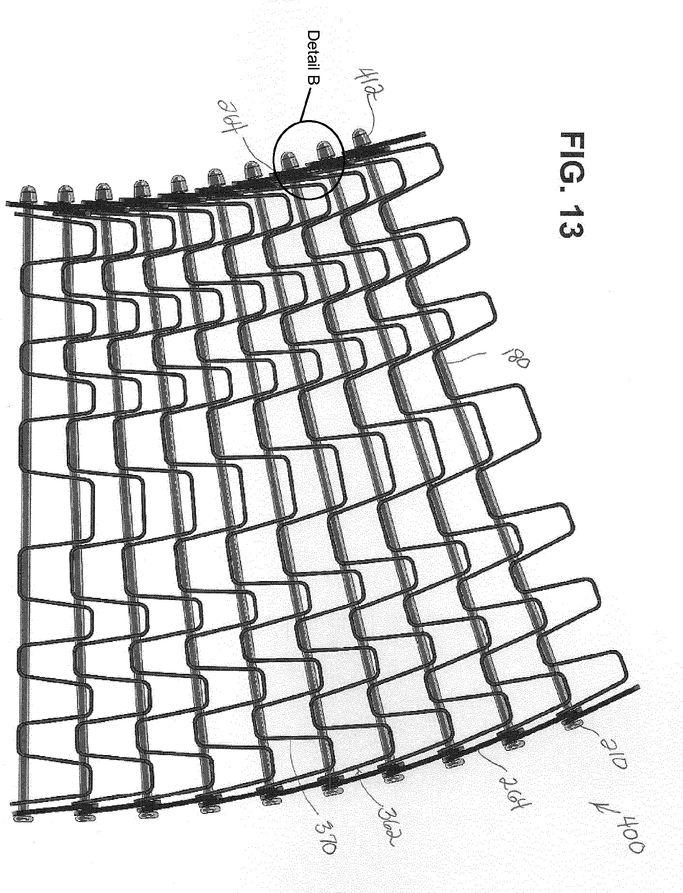

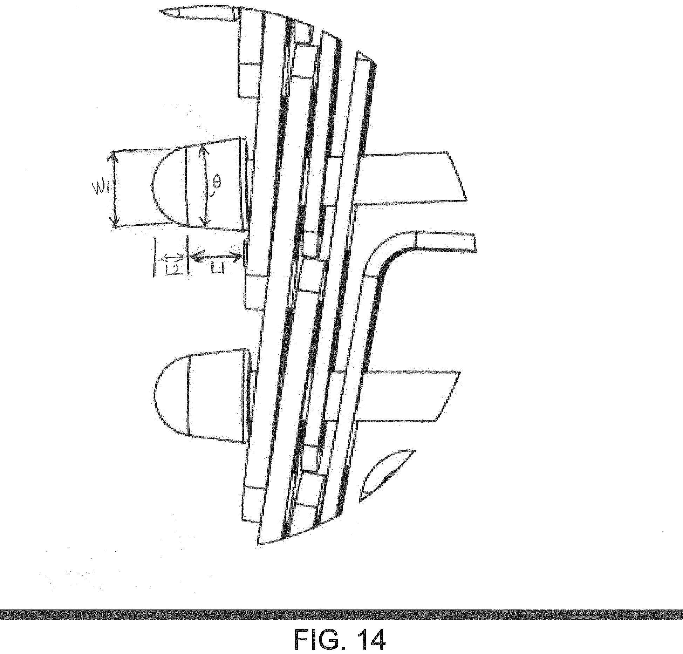

A conveyor belt in accordance with a further exemplary embodiment is shown generally in FIGS. 13 and 14 by reference numeral 400. Conveyor belt 400 preferably comprises a flat wire conveyor belt as described above relative to conveyor belt 300, although other belt types and configurations could of course be used. Conveyor belt 400 differs from the previously described conveyor belt 300 primarily in the shape of the cone ends 412, which are illustrated as being provided on the inner edge of each connecting rod 180 but could be provided on the inner edge of every other connecting rod 180 instead. According to the invention, the frustoconical body portion of the conical end 412 has a length L1 (in the axial direction of the connecting rod 180) of approximately 4.57 mm to 6.35 mm (0.18 inch to 0.25 inch), preferably 5.59 mm (0.22 inch). Conical ends 412 have rounded terminal ends that extend the overall length by an additional length L2 of 4.06 mm (0.16 inch). The ends 412 have tapered side surfaces defining an angle θ from the horizontal of approximately 15 degrees. At the base of the cone end 412 adjacent the reinforcing bar 264, the diameter of the cone end 412 is approximately 9.14 mm (0.36 inch). At the distal end of the frustoconical body portion, prior to the rounded terminal end, the cone end 412 has a width W1 (diameter) of approximately 8.13 mm (0.32 inch).

The conveyor belt according to any one of the exemplary embodiments described above is configured for use in a spiral or helical conveying system and, in particular, a conveying system including a drive means such as a spiral drum or cage which has driving surfaces, lugs or vertical bars configured to engage the cone shaped end portions 212, 412 in direct driving relationship. A rail is provided in such a system for supporting the belt as it travels through an endless path including a helical portion extending through a plurality of vertically spaced loops with the belt curved laterally in each of the loops. The rail includes an approach portion leading into a first loop at one end of the helical portion and an exit portion leading away from a last loop at the other end of the helical portion. With reference to FIG. 15, the radius of the rail 306 at the approach portion is preferably configured such that the hold-down clips 60 hold the conveyor belt away from the rotating spiral drive means and then gradually bring the belt closer and into contact with the first driving surface so that the cone shaped end 212, 412 can smoothly engage the driving surface. Similarly, upon exiting the helical portion of the conveyor system, the radius of the rail 306 is configured to allow for smooth disengagement between the driving surface and the cone shaped ends 212, 412.

While the use of the various embodiments of the cone ends are described as being on every inner edge or every other inner edge of the conveyor belt, even less frequency thereof could be applied to the conveyor belt. That is, the conveyor belt may include cone ends on only every third or fourth inner edge of the connecting rod. Still further, the belt may be manufactured without any reinforcing bars or alternatively, several rows of reinforcing bars may be provided, depending upon the particular application. Thus, it should be apparent to one skilled in the art, that any combination of coned ends and/or reinforcing bars may be used depending upon the particular application for which the conveyor belt is intended.

While the disclosure herein has been described with respect to particular exemplary embodiments, this is by way of illustration for purposes of disclosure rather than to confine the invention to any specific arrangement as there are various alterations, changes, deviations, eliminations, substitutions, omissions and departures which may be made in the particular embodiment shown and described without departing from the scope of the claims.

## Claims

1. A conveyor belt (200) comprising:
a plurality of spaced tractive rods (180) including opposing inner and outer ends; and
a support surface transversely disposed with respect to a direction of travel and interconnecting said plurality of spaced tractive rods;
wherein at least one of the inner and outer ends of at least some of the plurality of spaced tractive rods (180) includes a cone shaped end portion (212);
wherein the cone shaped end portion (212) comprises a frustroconical body portion, extending a first length (L1), the cone shaped end portion (212) including tapered side surfaces, a distal end of the tapered side surfaces defining a first width (W1), **characterized in that**, the distal end of the tapered side surfaces further defines rounded distal edges and a substantially planar end surface defining a second width (W2), the second width being less than the first width.

2. A conveyor belt (200) comprising:
a plurality of spaced tractive rods (180) including opposing inner and outer ends; and
a support surface transversely disposed with respect to a direction of travel and interconnecting said plurality of spaced tractive rods;
wherein at least one of the inner and outer ends of at least some of the plurality of spaced tractive rods (180) includes a cone shaped end portion (212); and
wherein the cone shaped end portion (212) comprises a frustroconical body portion **characterized in that** the frustoconical body portion extends a first length (L1) of approximately 4.57-6.35 mm, and wherein the cone shaped end portion has a rounded terminal end extending by an additional second length (L2) of approximately 4.06 mm

3. The conveyor belt (200) according to claim 1 or 2, wherein both of the inner and outer ends include a cone shaped end portion (212).

4. The conveyor belt (200) according to claim 1 or 2, wherein the at least one of the inner and outer ends includes the inner end including the cone shaped end portion (212), the outer end including a button head welded end.

5. The conveyor belt (200) according to claim 1 or 2, wherein the at least some of the plurality of spaced tractive rods (180) comprises alternate rods in the plurality of spaced tractive rods (180).

6. The conveyor belt (200) according to claim 1 or 2, wherein the support surface comprises a plurality of rows comprising a U-shaped link (270) on an edge of each row.

7. The conveyor belt (200) according to claim 6, wherein the support surface further comprises a mesh overlay (190) extending between the U-shaped links (270).

8. The conveyor belt (200) according to claim 6, wherein at least some of the rows include a hold-down clip (60).

9. The conveyor belt (200) according to claim 1 or 2, wherein the support surface comprises a plurality of rows including a flat wire wicket (262).

10. A conveyor system comprising:
a conveyor belt (200) comprising a plurality of spaced tractive rods (180) including opposing inner and outer ends; and a support surface transversely disposed with respect to a direction of travel and interconnecting said plurality of spaced tractive rods (180);
wherein at least the outer end of at least some of the plurality of spaced tractive rods (180) include a hold-down clip (60); **drive means;** and
a rail (306) for supporting said belt for passage through an endless path including a helical portion extending through a plurality of vertically spaced loops with the belt curved laterally in each of said loops, an approach portion leading into a first loop at one end of said helical portion and an exit portion leading away from a last loop at the other end of said helical portion;
wherein said hold-down clips (60) engage said rail at an outer edge of the conveyor belt (200) to thereby hold an inner edge of the conveyor belt (200) away from the drive means, **characterized in that** at least the inner end of at least some of the plurality of spaced tractive rods (180) includes a cone shaped end portion (212); **in that the** drive means having driving surfaces configured to engage said cone shaped end portions (212) in direct driving relationship; **and in that** said rail (306) being configured with a predetermined gradually decreasing radius of curvature so as to gradually bring the belt (200) into engagement with the driving surfaces at the approach portion and out of engagement with the driving surface at the exit portion.

11. The conveyor system according to claim 10, wherein the cone shaped end portion (212) comprises a frustoconical body portion.

12. The conveyor system according to claim 11, wherein the cone shaped end portion (212) further includes a substantially planar end surface.

13. The conveyor system according to claim 11, wherein the cone shaped end portion (212) further includes a rounded distal end portion.

## Patentansprüche

1. Förderband (200), umfassend:
eine Mehrzahl beabstandeter Zugkraftstangen (180) mit entgegengesetzten inneren und äußeren Enden; und
eine Stützfläche, die im Verhältnis zu einer Laufrichtung transversal angeordnet ist und die Mehrzahl beabstandeter Zugkraftstangen miteinander verbindet;
wobei mindestens eines der inneren und äußeren Enden mindestens einiger der Mehrzahl beabstandeter Zugkraftstangen (180) ein kegelförmiges Endstück (212) umfasst;
wobei das kegelförmige Endstück (212) einen kegelstumpfförmigen Körperteil umfasst, der sich über eine erste Länge (L1) erstreckt, wobei das kegelförmige Endstück (212) verjüngte Seitenflächen umfasst, wobei ein distales Ende der verjüngten Seitenflächen eine erste Breite (W1) definiert, **dadurch gekennzeichnet, dass** das distale Ende der verjüngten Seitenflächen ferner abgerundete distale Kanten definiert, und mit einer im Wesentlichen planaren Stirnfläche, die eine zweite Breite (W2) definiert, wobei die zweite Breite kleiner ist als die erste Breite.

2. Förderband (200), umfassend:
eine Mehrzahl beabstandeter Zugkraftstangen (180) mit entgegengesetzten inneren und äußeren Enden; und
eine Stützfläche, die im Verhältnis zu einer Laufrichtung transversal angeordnet ist und die Mehrzahl beabstandeter Zugkraftstangen miteinander verbindet;
wobei mindestens eines der inneren und äußeren Enden mindestens einiger der Mehrzahl beabstandeter Zugkraftstangen (180) ein kegelförmiges Endstück (212) umfasst; und
wobei das kegelförmige Endstück (212) einen kegelstumpfförmigen Körperteil umfasst, **dadurch gekennzeichnet, dass** sich der kegelstumpfförmige Körperteil über eine erste Länge (L1) von ungefähr 4,57 bis 6,35 mm erstreckt, und wobei das kegelförmige Endstück eine abgerundete Abschlusskante aufweist, die sich um eine zusätzliche zweite Länge (L2) von ungefähr 4,06 mm erstreckt.

3. Förderband (200) nach Anspruch 1 oder 2, wobei das innere und das äußere Ende ein kegelförmiges Endstück (212) umfassen.

4. Förderband (200) nach Anspruch 1 oder 2, wobei das mindestens eine Ende des inneren und äußeren Endes das innere Ende umfasst, welches das kegelförmige Endstück (212) umfasst, wobei das äußere Ende ein geschweißtes Rundkopfende umfasst.

5. Förderband (200) nach Anspruch 1 oder 2, wobei die mindestens einigen der Mehrzahl beabstandeter Zugkraftstangen (180) in der Mehrzahl beabstandeter Zugkraftstangen (180) sich abwechselnde Stangen umfassen.

6. Förderband (200) nach Anspruch 1 oder 2, wobei die Stützfläche eine Mehrzahl von Reihen umfasst, die eine U-förmige Verbindung (270) an einer Kante jeder Reihe umfassen.

7. Förderband (200) nach Anspruch 6, wobei die Stützfläche ferner eine Maschenauflage (190) umfasst, die sich zwischen den U-förmigen Verbindungen (270) erstreckt.

8. Förderband (200) nach Anspruch 6, wobei mindestens einige der Reihen eine Halteschelle (60) umfassen.

9. Förderband (200) nach Anspruch 1 oder 2, wobei die Stützfläche eine Mehrzahl von Reihen umfasst, die ein Flachdrahtfenster (262) umfassen.

10. Fördersystem, umfassend:
ein Förderband (200), das eine Mehrzahl beabstandeter Zugkraftstangen (180) mit entgegengesetzten inneren und äußeren Enden umfasst; und eine Stützfläche, die im Verhältnis zu einer Laufrichtung transversal angeordnet ist und die Mehrzahl beabstandeter Zugkraftstangen (180) miteinander verbindet;
wobei mindestens das äußere Ende der mindestens einigen beabstandeten Zugkraftstangen (180) eine Halteschelle (60) umfassen;
Antriebsmittel;
eine Schiene (306) zum Tragen des Bands für einen Verlauf um eine Endlosbahn, mit einem spiralförmigen Teil, der sich durch eine Mehrzahl vertikal beabstandeter Schlaufen erstreckt, wobei das Band in jeder der Schlaufen lateral gekrümmt ist, mit einem Näherungsteil, der in eine erste Schlaufe an einem Ende des spiralförmigen Teils führt, und mit einem Austrittsteil, der von einer letzten Schlaufe an dem anderen Ende des spiralförmigen Teils weg führt;
wobei die Halteschellen (60) an einer Außenkante des Förderbands (200) mit der Schiene eingreifen, um dadurch eine Innenkante des Förderbands (200) von dem Antriebsmittel weg zu halten;
**dadurch gekennzeichnet, dass** mindestens das innere Ende mindestens einiger der Mehrzahl beabstandeter Zugkraftstangen (180) ein kegelförmiges Endstück (212) umfasst; dass die Antriebsmittel Antriebsflächen aufweisen, die für einen Eingriff mit dem kegelförmigen Endstücken (212) in direktem Antriebsverhältnis gestaltet sind; und dass die Schiene (306) mit einem vorbestimmten, allmählich abnehmenden Krümmungsradius gestaltet ist, um das Band (200) allmählich in Eingriff mit den Antriebsflächen an dem Näherungsteil und aus dem Eingriff mit der Antriebsfläche an dem Austrittsteil zu bringen.

11. Fördersystem nach Anspruch 10, wobei das kegelförmige Endstück (212) einen kegelstumpfförmigen Körperteil umfasst.

12. Fördersystem nach Anspruch 11, wobei das kegelförmige Endstück (212) ferner eine im Wesentlichen planare Stirnfläche umfasst.

13. Fördersystem nach Anspruch 11, wobei das kegelförmige Endstück (212) ferner ein abgerundetes distales Endstück umfasst.

## Revendications

1. Courroie transporteuse (200) comprenant :
une pluralité de tiges de traction espacées (180) incluant des extrémités intérieure et extérieure opposées ; et
une surface de support disposée transversalement par rapport à une direction de déplacement et interconnectant ladite pluralité de tiges de traction espacées ;
dans laquelle au moins une des extrémités intérieure et extérieure d'au moins certaines de la pluralité de tiges de traction espacées (180) inclut une portion d'extrémité en forme de cône (212) ;
dans laquelle la portion d'extrémité en forme de cône (212) comprend une portion de corps tronconique, s'étendant sur une première longueur (L1), la portion d'extrémité en forme de cône (212) incluant des surfaces latérales effilées, une extrémité distale des surfaces latérales effilées définissant une première largeur (W1), **caractérisé en ce que** l'extrémité distale des surfaces latérales effilées définit en outre des bords distaux arrondis et une surface d'extrémité sensiblement planaire définissant une seconde largeur (W2), la seconde largeur étant inférieure à la première largeur.

2. Courroie transporteuse (200) comprenant :
une pluralité de tiges de traction espacées (180) incluant des extrémités intérieure et extérieure opposées ; et
une surface de support disposée transversalement par rapport à une direction de déplacement et interconnectant ladite pluralité de tiges de traction espacées ;
dans laquelle au moins une des extrémités intérieure et extérieure d'au moins certaines de la pluralité de tiges de traction espacées (180) inclut une portion d'extrémité en forme de cône (212) ; et
dans laquelle la portion d'extrémité en forme de cône (212) comprend une portion de corps tronconique, **caractérisé en ce que** la portion de corps tronconique s'étend sur une première longueur (L1) d'environ 4,57 à 6,35 mm, et dans laquelle la portion d'extrémité en forme de cône présente une extrémité terminale arrondie s'étendant par une seconde longueur supplémentaire (L2) d'environ 4,06 mm.

3. Courroie transporteuse (200) selon la revendication 1 ou 2, dans laquelle à la fois les extrémités intérieure et extérieure incluent une portion d'extrémité en forme de cône (212).

4. Courroie transporteuse (200) selon la revendication 1 ou 2, dans laquelle la au moins une des extrémités intérieure et extérieure inclut l'extrémité intérieure incluant la portion d'extrémité en forme de cône (212), l'extrémité extérieure incluant une extrémité soudée à tête.

5. Courroie transporteuse (200) selon la revendication 1 ou 2, dans laquelle les au moins certaines de la pluralité de tiges de traction espacées (180) comprennent des tiges alternatives dans la pluralité de tiges de traction espacées (180).

6. Courroie transporteuse (200) selon la revendication 1 ou 2, dans laquelle la surface de support comprend une pluralité de rangées comprenant une liaison en forme de U (270) sur un bord de chaque rangée.

7. Courroie transporteuse (200) selon la revendication 6, dans laquelle la surface de support comprend en outre un revêtement maillé (190) s'étendant entre les liaisons en forme de U (270).

8. Courroie transporteuse (200) selon la revendication 6, dans laquelle au moins certaines des rangées incluent une pince de retenue (60).

9. Courroie transporteuse (200) selon la revendication 1 ou 2, dans laquelle la surface de support comprend une pluralité de rangées incluant un guichet à fil plat (262).

10. Système de courroie comprenant :
une courroie transporteuse (200) comprenant une pluralité de tiges de traction espacées (180) incluant des extrémités intérieure et extérieure opposées ; et une surface de support disposée transversalement par rapport à une direction de déplacement et interconnectant ladite pluralité de tiges de traction espacées (180) ;
**caractérisé en ce qu'**au moins l'extrémité intérieure d'au moins certaines de la pluralité de tiges de traction espacées (180) inclut une portion d'extrémité en forme de cône (212) ; dans lequel au moins l'extrémité extérieure d'au moins certaines de la pluralité de tiges de traction espacées (180) inclut une pince de retenue (60) ;
**un moyen d'entraînement ; en ce que** le moyen d'entraînement présentant des surfaces d'entraînement configurées pour engager lesdites portions d'extrémité en forme de cône (212) en relation d'entraînement direct ; et
un rail (306) pour supporter ladite courroie pour un passage à travers un trajet infini incluant une portion hélicoïdale s'étendant à travers une pluralité de boucles espacées verticalement avec la courroie incurvée latéralement dans chacune desdites boucles, une portion d'approche menant dans une première boucle au niveau d'une extrémité de ladite portion hélicoïdale et une portion de sortie menant à l'opposé d'une dernière boucle au niveau de l'autre extrémité de ladite portion hélicoïdale ;
dans lequel lesdites pinces de retenue (60) engagent ledit rail au niveau d'un bord extérieur de la courroie transporteuse (200) pour ainsi maintenir un bord intérieur de la courroie transporteuse (200) à distance du moyen d'entraînement,
**et en ce que**
ledit rail (306) étant configuré avec un rayon de courbure graduellement diminuant prédéterminé de manière à amener graduellement la courroie (200) en engagement avec les surfaces d'entraînement au niveau de la portion d'approche et hors d'engagement avec la surface d'entraînement au niveau de la portion de sortie.

11. Système de courroie selon la revendication 10, dans lequel la portion d'extrémité en forme de cône (212) comprend une portion de corps tronconique.

12. Système de courroie selon la revendication 11, dans lequel la portion d'extrémité en forme de cône (212) inclut en outre une surface d'extrémité sensiblement planaire.

13. Système de courroie selon la revendication 11, dans lequel la portion d'extrémité en forme de cône (212) inclut en outre une portion d'extrémité distale arrondie.
